## Europäisches Patentamt
## European Patent Office
## Office européen des brevets

(19)

(11) Publication number: **0 071 112**
**A2**

(12) # EUROPEAN PATENT APPLICATION

(21) Application number: **82106418.5**

(22) Date of filing: **16.07.82**

(51) Int. Cl.³: **F 03 G 1/00**
**F 02 N 5/02**

(30) Priority: **31.07.81 IT 2327481**

(43) Date of publication of application:
**09.02.83 Bulletin 83/6**

(84) Designated Contracting States:
**DE FR GB**

(71) Applicant: **INDUSTRIE PIRELLI S.p.A.**
**Piazzale Cadorna, 5**
**I-20123 Milan(IT)**

(72) Inventor: **Tangorra, Giorgio**
**Via Ramazzotti, 12**
**Monza Milan(IT)**

(74) Representative: **Dr. E. Wiegand Dipl.-Ing. W. Niemann**
**Dr. M. Kohler Dipl.-Ing. C. Gernhardt Dipl.-Ing. J. Glaeser**
**Patentanwälte**
**Herzog-Wilhelm-Strasse 16**
**D-8000 München 2(DE)**

(54) **Energy accumulator and device comprising said accumulator.**

(57) The invention describes an energy accumulator and a device comprising it, where energy is stored in elastic elements (3 or 12 or 20 or 23 or 26 or 38) compressed by means of a flexible and inextensible element (9 or 18 or 29) passing inside them which winds/unwinds on and from a rotating shaft (1 or 35).

Fig.1

EP 0 071 112 A2

ENERGY ACCUMULATOR AND DEVICE COMPRISING SAID ACCUMULATOR

The present invention refers to an energy accumulator and to a device comprising said accumulator, and in particular it refers to an energy accumulator comprising elastic means for storing energy and to an engine starter comprising said accumulator.

One of the problems of known accumulators which are provided with elastic means for storing energy, is to guarantee a sufficiently long useful life to said elastic means, i.e. to allow a very high number of working cycles before they are damaged.

One aim of the present invention is to provide an energy accumulator having elastic means for storing energy which have a very long useful life, which are able to store large quantities of energy in relation to the total weight of the accumulator and which have reduced dimensions.

A further aim of the present invention is to provide a starter for internal combustion or electric engines for example, comprising an energy accumulator being able to support a high number of working cycles without drawbacks or damages.

One object of the present invention is an energy accumulator comprising a rotating shaft and elastic means for storing energy characterized by the fact of comprising means for converting rotatory motion of the shaft into translatory motion of the elastic means.

A further object of the present invention is an engine starter comprising a first device for transferring energy to an energy accumulator and a second device for transferring said energy to the engine to be started characterized by the fact that said accumulator comprises a rotating shaft, elastic means for storing energy and means for converting rotatory motion of the shaft into translatory
motion of said elastic means.

The present invention will be better understood by the
following detailed description given by way of nonlimiting examples with reference to the figures of the
enclosed drawing sheets wherein:

Figure 1 shows in perspective view an energy accumulator
according to the present invention;

Figures 2 and 3 show in section view, unloaded and at the
highest load respectively, an energy accumulator according
to the present invention;

Figures 4, 5 and 6 show in section view different embodiments of an energy accumulator according to the present
invention;

Figure 7 shows in perspective view another embodiment of
an energy accumulator according to the present invention;

Figure 8 schematically shows an engine starter comprising
an energy accumulator according to the present invention.

In a more general solution according to the present
invention, an energy accumulator comprises at least a rotating shaft, elastic means for storing energy and means
for converting rotatory motion of the rotating shaft into
translatory motion of said elastic means.

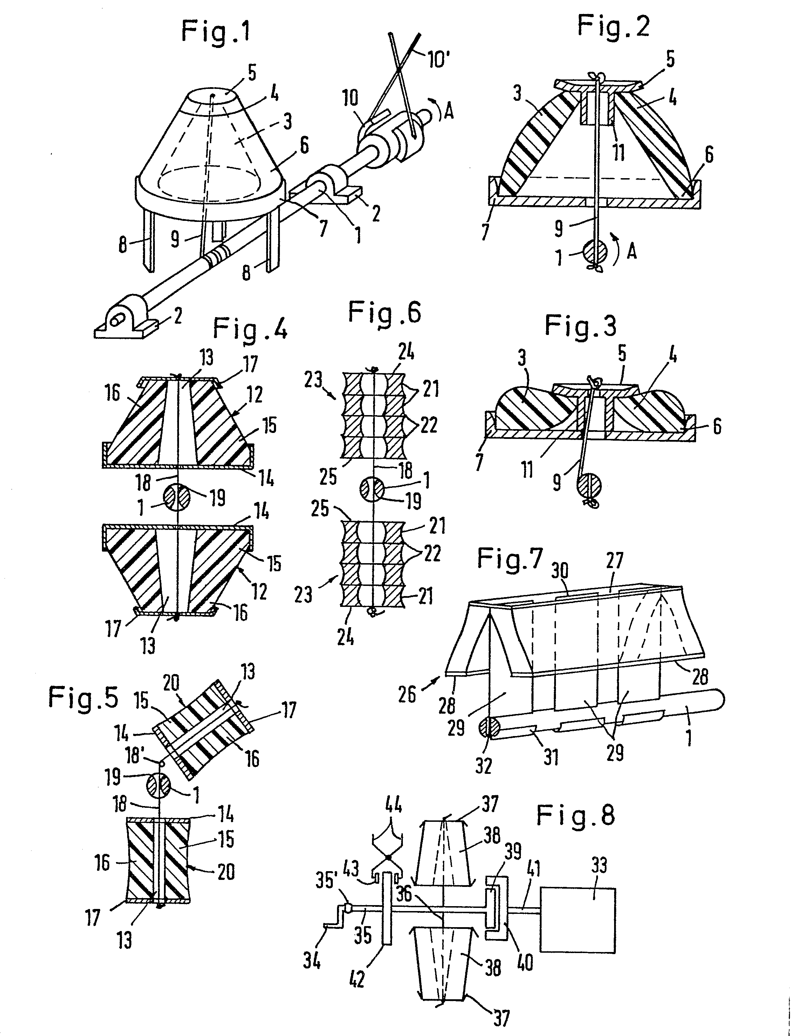

Figure 1 shows in perspective view an energy accumulator
according to the present invention. Said accumulator
comprises a rotating shaft 1, supported by two supports 2
provided with bearings and spaced apart from each other.
Stably connected with said supports 2 is an extremity of
the elastic means in which energy can be stored. Said
elastic means foresee a truncated-conical spring 3 of elastomeric material having inside an axial opening indicated by dashes. The base of said spring 3 farthest from the shaft axis and i.e. in the example of figure 1, the smaller base 4 is provided with a rigid cap 5. The base nearest to said shaft axis, and i.e. the greater base 6 is fixed with respect to the position of the axis of said shaft 1 by being connected to a rigid seat 7 which leans, for example by means of supports 8, on the base on which lean the supports 2 of shaft 1 itself.

Moreover, means for converting rotatory motion of the shaft 1 into translatory motion of said elastic means 3 are foreseen, too. In particular said means make the base 5 of spring 3, farthest from shaft 1, translate with respect to shaft 1 and in particular to translate towards the shaft 1 itself.

Said means comprise in a particular embodiment according to the present invention, a flexible and inextensible element as for example a rope 9 windable on shaft 1.

Said rope 9 can be for example metallic, or can consist of textile or of synthetic fibres such as for example carbon fibres, polyamides or aromatic polyamides.

Said rope 9 has one of its extremities connected to rigid cap 5 for example by means of a knot while the other extremity is connected to shaft 1 itself so as to be able to wind or unwind on or from said shaft 1 according to its direction of rotation. A brake 10, applied by pliers 10', is associated to shaft 1 and operates to block said shaft 1 whenever one wants to prevent the accumulator itself from loading.

Figures 2 and 3 show in section view, unloaded and at its own highest applied load, respectively, an energy accumulator according to the present invention very similar to the accumulator of figure 1 and therefore the same elements are indicated by the same reference numbers in the three figures. In figure 2 spring 3 is shown with a certain degree of preloading also when the accumulator is unloaded. Moreover, to cap 5 are associated stroke-end stop means for the accumulator itself. Said means are, in the particular embodiment according to the present invention, a tubular extension 11 extending into the inside of the axial cavity of the spring 3 itself. Both the cap 5 and the rigid seat 7 are moreover shaped along their own edges 10 so as not to damage spring 3 itself.

In figure 3 said spring 3 is shown at its highest degree of deformation and i.e. when the tubular extension 11 associated to cap 5 abuts against rigid seat 7. Said spring 3 can be simply inserted into seat 7, or can be connected to it by a rubber/metal bond. Likewise cap 5 can be pulled into the hole of base 4, or can be connected to spring 3 by a rubber/metal bond.

In figures 4, 5 and 6 other embodiments of springs, which can be used in energy accumulators according to the present invention, are shown.

The accumulators represented in said figures 4, 5 and 6 have the particular characteristic that, being the springs are two and being arranged symmetrically with respect to the shaft 1, the radial forces exerted by the springs themselves on the shaft 1 are balanced. The same result can be obtained, other than by two springs arranged at 180° to each other with respect to the shaft 1, also by three springs arranged at 120°, by four springs arranged at 90° and so on, on the condition that the springs have elastic characteristics equal to each other. Said solutions, apart from reducing or eliminating radial stresses on the shaft, allow for a predetermined amount of energy to be stored, a reduction of the overall dimensions because it is possible to distribute the stored energy to several springs of reduced dimensions. On the other hand, for predetermined overall dimensions the said solutions allow to store a higher amount of energy because it is possible to use more springs arranged like the spokes of a wheel around the shaft 1.

Moreover, using an even number of springs, the arrangement and connection of flexible and inextensible elements to the springs themselves are simplified.

In fact figure 4 shows two truncated-pyramidal springs 12 of elastomeric material having an opening 13 in their inside. Said springs 12 lean on a seat 14, which is fixed with respect to shaft 1 ,by means of their base 15 nearest to the shaft 1 itself while their base 16 farthest from the shaft 1 is provided with a cap 17.

A proper flexible and inextensible element, such as a rope 18, has each of its own extremities bound to a cap 17, and goes through both springs 12 through their openings 13 and shaft 1 through a diametral shaped bore or slot 19 being present in the shaft 1. Said rope 18 is therefore a particular embodiment according to the present invention of a means for converting rotatory motion of the shaft 1 into translatory motion of springs 12.

The accumulator of figure 5 differs from the one of figure 4 because of shape and arrangement of the elastic means 12. In fact said elastic means are cylindrical springs 20 of elastomeric material, one of which is arranged at an angle with respect to shaft 1.

In order to guarantee its operation, rope 18 is guided by a proper pulley 18'. Said pulley 18' can be unnecessary, if spring 20 is properly arranged, thanks to the shape. of slot 19. In fact it is sufficient that the axis of spring 20 is tangent to the wall of bore 19 at one of its points and therefore also rope 18 will be tangent to the shaped bore 19 wall at that point. The inclined arrangement of at least one of the springs 20 allows an easier insertion of the accumulator with respect to the elements surrounding it. This can also be obtained by positioning said springs at different distances with respect to shaft 1 itself.

In figure 6 the elastic means of the energy accumulator are formed by a plurality of discs 21 of elastomeric material having a central opening which discs 21 alternate with rigid plates 22. Also in this case, as in the case of the cylindrical springs 20 of figure 4, said discs 21 are connected to the rigid plates 22 by a rubber/metal bond so as to form a unitary spring 23 for the accumulator itself.

The rigid plates 24 placed at the extremity of each unitary spring 23 being farther with respect to shaft 1 are connected to rope 18 while the rigid plates 25 placed in correspondence of the extremity nearest to shaft 1 of said unitary spring 23 are properly bound so as to remain fixed with respect to shaft 1 itself.

Figure 7 shows a further embodiment of an energy accumulator according to the present invention, in which the elastic means are formed of at least a prism 26 of elastomeric material. Said prism 26 can constitute an integral body, i.e. can be formed of a single shaped body of elastomeric material or can be formed of two parallel epipeds of elastomeric material connected to base plates by a rubber/metal bond. Said prism 26 is provided with a first plate 27 in correspondence of its base farthest from shaft 1 while the bases nearest to said shaft 1 are associated to two little plates 28 made integral and fixed with respect to shaft 1 itself. To plate 27 are moreover connected means for converting rotatory motion of shaft 1 itself into translatory motion of the base farthest from the shaft 1 itself of said prism 26. Said means comprise in a particular embodiment according to the present invention, at least a flexible and inextensible element 29 (the figure shows three of these inextensible elements 29) such as for example a strip of metallic material, a strip of elastomeric material embedding a traction-resistant insert, or a flat belt.

Said element 29 has one of its own extremities 30 connected to said plate 27 while the opposite extremity 31 is connected to shaft 1 after passing through a slot 32. Figure 7 shows only one prismatic spring but, as for the aforementioned energy accumulators, more prismatic springs can be arranged around shaft 1, and preferably can be symmetrically arranged so as to obtain the previously described advantages also for this solution.

The energy accumulator operation will be now described with reference to figures 1, 2 and 3. Considering that the accumulator is unloaded, and i.e. that it has only the necessary preloading to maintain the flexible and inextensible element (rope 9) stretched and to recover its possible relaxations, the energy storage is obtained by rotating shaft 1 for example in an counterclockwise direction as indicated by the arrow indicated with the reference letter A in said figures. When shaft 1 rotates, rope 9 is obliged to wind on it and therefore it subjects said spring 3 to a compressive stress until the highest amount of energy being storable in the accumulator itself, is reached and i.e. until the tubular extension 11 of cap 5 abuts against seat 7.

Shaft 1 is now blocked by brakes 10 acting on pliers 10'. In order to release the stored energy from spring 3 it is sufficient to actuate pliers 10' so as to disengage brakes 10 from the shaft 1 letting the shaft 1 itself free. Therefore spring 3 will return to its original position if the brakes 10 are not applied again so as to maintain part of the energy stored in the spring 3 itself.

The present invention foresees, moreover, in its ambit devices such as starters for electric or internal combustion engines, accumulators for braking energy of vehicles and so on which use as an energy accumulator an accumulator according to the present invention.

Figure 8 schematically shows ., only by way of example, a starter for an engine 33, for example for an internal combustion engine.

Said starter comprises a first device for transferring energy to an accumulator of the previously described type and a second device for transferring the stored energy to the engine to be started. Moreover means for provoking the energy transfer from the accumulator to the engine itself are foreseen.

Said first device comprises, in an engine starter according to the present invention shown in said figure 8, a handle 34 which can be connected to shaft 35 by means of a joint 35' in order to make it rotate.

A suitable flexible and inextensible element 36 passes through a bore of the shaft 35 in order to wind on it when rotating. The extremities of said element 36 are connected to caps 37 which are connected to the base farthest from the shaft 35 of springs 38 of elastomeric material similar to those shown in figure 4. The base of said springs 38 which is nearest the shaft 35 itself, is on the contrary maintained fixed with respect to the shaft 35. To said shaft 35 a portion of said second device for transferring the stored energy from the accumulator to engine 33 is keyed. Said device comprises an one-directional centrifugal joint and i.e. a joint which allows the motion transmission only in one rotational direction while in the other rotational direction the joint is not engaged and there is therefore no motion transmission by the joint itself.

9

Said device foresees in fact an element 39 keyed to the extremity of the shaft 35 and comprising a series of sectors (not shown in figure) radially movable during rotation in one direction because of the centrifugal force acting on them due to the rotation imparted to the shaft 35 itself by the springs 38 of the accumulator.

Said sectors, when radially moving, engage with a sleeve 40, coaxial to element 39 and arranged in a radially outermost position with respect to element 39 itself. Said sleeve 40 is keyed to a shaft 41 being integral with the shaft of engine 33. Said starter comprises moreover means for controlling the energy transfer from the accumulator to the engine 33 itself. Said means comprise a wheel 42 keyed to shaft 35, with which wheel 42 brakes 43 can be engaged, actuated by proper pliers 44.

The operation of the engine starter schematically shown in figure 8 is the following.

To load the starter accumulator, the handle 34 is acted upon so as to make shaft 35 rotate. When rotating, said shaft 35 winds on itself rope 36 (which passes through a shaped bore of shaft 35) and therefore the extremities of rope 36 approach the shaft 35 itself shortening springs 38 and thus storing energy. When sufficient energy is stored in said accumulator, the pliers 44 are acted upon so as to block shaft 35 after brakes 43 have blocked wheel 42 keyed to the shaft 35 itself. Now the handle 34 can be separated from shaft 35 and when engine 33 shall be started said pliers 44 will be acted upon thus releasing wheel 42 and in particular shaft 35. Springs 38 will thus return to their unloaded position releasing the energy stored in them.

Returning to their unloaded position, the springs 38 will bring rope 36 to a stretched position by unwinding it from shaft 35 and therefore making the latter rotate. The rotation of shaft 35 will make it possible to radially move sectors present on element 39 and these sectors will engage with sleeve 40 which, actuating shaft 41, will make the engine 33 shaft rotate thus starting the engine itself.

The present invention reaches predetermined aims. In fact the accumulators according to the present invention solve both the problem of long lifetime of the elastic elements storing energy and the problem of reducing the dimensions of the accumulator itself. In fact the deformation, the elastic elements have been subjected to, is a deformation only by compression or by combined compressive and bending stress and therefore, said elements being preferably of elastomeric material, they can support a very high number of working cycles without being damaged or anyway without suffering collapses or ruptures.

Thanks to the particular structure of the means for converting rotatory motion of the accumulator shaft into translatory motion of said elastic means, and in particular into a radial motion for approaching the axis of the shaft, weight and dimension reductions can be reached. In fact the presence of the flexible and inextensible elements allows to set the storing energy elements almost in contact with the shaft or possibly also around the shaft itself thus reducing the dimensions of the accumulator itself.

Moreover, since said elastic means for storing energy can be arranged in any direction with respect to the shaft, a proper arrangement can be chosen allowing an easier insertion of the accumulator itself into a vehicle structure or into the particular structure in which it is used.

The use of a flexible und inextensible element for converting rotatory motion of the shaft into translatory motion of compression of the elastic elements also provides a greater simplicity to the accumulator itself besides to reduce the total weight of the accumulator with respect to other solutions comprising heavier and more complicated mechanical bodies thus allowing the accumulator according to the present invention to provide very high and advantageous stored energy/total weight ratios.

The devices according to the present invention, such as engine starters, or auxiliaries to the starting of vehicles using kinetic energy of the vehicles stored during braking, which comprise the accumulators according to the present invention, benefit by the above mentioned advantages.

Even if several embodiments of an energy accumulator or of an engine starter according to the present invention have been described and illustrated there have to be intended as comprised in their ambit all the possible variations accessible to a technician of the field.

There have to be intended as comprised in the ambit of the present invention also energy accumulators or starters comprising said accumulators, in which the elastic elements for storing energy are different from each other in couple or singularly but they must not be connected by only one flexible and inextensible element, so as to be able to provide a couple on the shaft of the accumulator itself having a more suitable characteristic with respect to the particular use for which they are used.

Still there have to be intended in the ambit of the present invention elastic means for storing energy of any shape and material, and i.e. also for example of metal.

Furthermore in spite of the fact that said elastic means are subjected to deformations making an extremity translate so as to compress them, they can have alternatively their extremity nearest to the rotating shaft connected to the means for converting rotatory motion of the shaft into translatory motion of said elastic means so as to be subjected to traction only or, possibly, said connection point can be found in an intermediate point comprised between the extremities of said elastic element so as to be able to subject them to bending stress. Moreover, notwithstanding the fact that the springs described in figures 1, 2, 3, 4 and 7 are shown with their greater base near the shaft, said base can be also farthest from the shaft itself and the smaller base can be instead placed near the shaft, without going beyond the ambit of the present invention.

Finally also other systems for converting rotatory motion of the rotating shaft into translatory motion of the elastic means can be used in the ambit of the present invention. Said systems can be for example a toothed wheel connected to said rotating shaft and engaging with one or more racks connected to the elastic means or alternatively said toothed wheel can engage with a rack arranged on the inner surface of a slab having the configuration of a portion of circle, said slab being hinged in one point, said slab being connected to said elastic means so as to be able to translate one of their extremities.

WHAT IS CLAIMED IS:

1. Energy accumulator comprising a rotating shaft (1 or 35) and elastic means (3 or 12 or 20 or 23 or 26 or 38) for storing energy, characterized by the fact of comprising means (9 or 18 or 29) for converting rotatory motion of the shaft (1 ot 35) into translatory motion of the elastic means.

2. Accumulator according to claim 1, characterized by the fact that said means for converting rotatory motion of the shaft (1 or 35) into translatory motion of the elastic means comprise at least one flexible and inextensible element (9 or 18 or 29) windable on said shaft and having one of its extremities connected to said elastic means in correspondence with the end of said elastic means farthest from the shaft itself.

3. Accumulator according to claim 2, characterized by the fact that said elastic means are radially arranged with respect to the axis of the rotating shaft.

4. Accumulator according to claim 2 or 3, characterized by the fact that said flexible and inextensible element windable on said shaft has each of its extremities connected to elastic means in correspondence with the end of said elastic means farthest from the shaft itself.

5. Accumulator according to any previous claim, characterized by the fact that said elastic means are springs having a first base being nearer to the rotating shaft and a second base being farther from said shaft, said second base being provided with a cap to which said flexible and inextensible element passing through the spring itself is connected, said first base being fixed with respect to the shaft.

6. Accumulator according to claim 5, characterized by the fact that said springs are of elastomeric material in a truncated conical or pyramidal shape.

7. Accumulator according to claim 5, characterized by the fact that said springs are of elastomeric material in a prismatic shape.

8. Accumulator according to claim 5, characterized by the fact that said springs are of elastomeric material in a cylindrical shape.

9. Engine starter comprising a first device for transferring energy to an energy accumulator and a second device for transferring said energy to the engine to be started, characterized by the fact that said accumulator comprises a rotating shaft (35), elastic means (38) for storing energy and means (9 or 18 or 29) for converting rotatory motion of the shaft into translatory motion of the elastic means.

10. Starter according to claim 9, characterized by the fact of comprising means (39, 40) for effecting the transfer of stored energy from the accumulator to the engine.

1/1

Fig.1

Fig.2

Fig.4

Fig.6

Fig.3

Fig.5

Fig.7

Fig.8